# EUROPEAN PATENT SPECIFICATION

(11) **EP 1 254 939 B1**
(45) Date of publication and mention of the grant of the patent: **14.06.2006**
(21) Application number: 01201593.9
(22) Date of filing: 02.05.2001
(51) Int. Cl.: C09J 103/04

(54) **Method for production of corrugated board and product obtained thereof**
Verfahren zur Herstellung einer Wellpappe und die hergestellte Wellpappe
Procédé de fabrication de carton ondulé ainsi que le carton ondulé

(43) Date of publication of application: 06.11.2002
(73) Proprietor: ECOSYNTHETIX INC., Lansing, MI 48910 (US)
(72) Inventor: Bloembergen, Steven, Okemos, Michigan 48864 (US); Kappen, Frans, 6702 AB Wageningen (NL); Van Leeuwen, Marinella, 6669 MB Dodewaard (NL)
(74) Representative: van Westenbrugge, Andries

(56) References cited:
- EP-A- 0 990 687
- WO-A-00/40617
- WO-A-00/69916
- US-A- 5 133 908

## Description

The invention relates to a method to produce corrugated board whereby a new type of adhesive is used to adhere the different paper layers to one another, under conditions that are suitable for producing corrugated board with the new adhesives. The adhesives used are referred to as biopolymer latex adhesives, which are comprised of biopolymer nanoparticles made from, for example, starch. Also included in this invention is corrugated board produced using this method.

Corrugated board is produced through the corrugating operation. Corrugating is carried out by passing a corrugating medium through the corrugator, whereupon intermeshed corrugated rolls impart a corrugated profile to the medium. Adhesive is applied to the tips of the medium (on one side) and a liner board is applied onto the side of the medium with the adhesive to form a single face. By adding additional adhesive to the unglued side of the medium, an additional layer of liner board can be adhered onto the single face, resulting in the production of a standard single wall corrugated board. A more detailed description of corrugating and corrugating adhesives can be found in "Preparation of Corrugating Adhesives", W. O. Koeschell, Ed., Technical Association of the Pulp and Paper Industry, Inc., 1977. There are many variations and multiple wall boards that can be constructed in the same general manner as described above by combining successive single face boards to each other, followed by a final application of a liner board. The adhesive used in corrugating plays an important role in the quality and production efficiency of single face and single (and multiple) wall corrugated boards.

The concept of cooking starch in situ was first mentioned by Lawrence L. Dreurden who developed a double facer corrugator section for Robert Gair Co., which was patented in 1899. However, the concept was not commercially developed until after the 1936 patent by Jordan V. Bauer of Stein Hall Co., who conceived of the process that led to broad acceptance of starch as a corrugating adhesive. This process consisted of a novel manner of using a starch adhesive where high temperatures are used to form the bond after the adhesive film has been applied. The starch adhesive principle is based on the suspension of raw, uncooked starch, by a cooked starch carrier. The carrier provides sufficient viscosity or body to allow deposition of the adhesive film on the corrugated flutes. As the combined line is subjected to high heat of the corrugating operation, the uncooked starch on the adhesive line gelatinizes to form the adhesive bond. Today this is still the dominant technology for corrugated board manufacturing.

Traditional starch adhesives used in corrugating operations are usually comprised of two types of starch - carrier starch and slurry starch (Peter A. Snyder, Corrugating International, Vol. 2, No. 4, October 2000, pp-175-179.). The carrier starch is used as a means to carry the uncooked slurry starch component in the adhesive preparation and imparts the initial green bond or green tack in the corrugating operation. Carrier starch is prepared by cooking starch beyond its gel point in the presence of chemicals such as caustic soda and borax. Caustic soda and borax are both added to modify the gel temperature and final properties of the adhesive starch preparation. Upon addition to the corrugated board in the corrugating operation, the starch adhesive is further heated to the point at which the slurry starch is itself converted into adhesive starch, the remaining water is evaporated and the final dry bond is formed in the corrugated board. It is understood that for any starch to be an adhesive, it must actually be in solution. Therefore, the carrier starch is the only truly adhesive component in the corrugating adhesive preparation when the adhesive is applied in the corrugating operation (Snyder, ibid.). The slurry starch becomes an effective adhesive only when it reaches sufficient temperature, the gel point, in the corrugator.

Preparation of carrier/slurry type starch corrugating adhesives, which are sometimes also referred to as Stein Hall adhesives, is well known for the corrugating industry. The carrier starch component of a corrugating adhesive is usually only a fraction of the total starch used in the adhesive. Typically, carrier starch may represent 5-25% of the total starch added in preparing the adhesive. In addition, borax is added to make the typical carrier/slurry starch type adhesive mixture thicker, stickier, and tackier (Snyder, ibid.). Caustic soda is added to the adhesive preparation in order to lower the gel point of the starch (effectively lowering the gelatinization temperature of the raw starch in the slurry starch). Caustic soda addition, therefore, improves the overall performance of the carrier/slurry starch type adhesive and is considered an integral part of the typical corrugating adhesive.

It is well known that many of the quality problems associated with corrugated board manufacture are associated with the adhesive and its application. Poor or non-uniform adhesives can result in substandard product. Excessive adhesive application can result in lower throughput through the corrugator as it is necessary that the slurry starch in the adhesive is properly heated to the adhesive gel point in order to produce a good dry bond in the final product. Usually hot plates or steam heated rolls are used in the corrugator to produce sufficient heat transfer to set and dry the adhesive in the double face or single wall board. If too little adhesive is applied, the corrugated board produced is generally substandard, generating excessive amounts of scrap. Therefore, considering the usual process fluctuations, it is generally better to apply at least two to three times more adhesive than required. Given that the adhesive contains 70 to 80% water, the maximum speed of the corrugator is generally limited by the length of the oven line at the end of the corrugating operation.

A typical industrial corrugator requires energy input in order to heat the corrugated board to a sufficient temperature to remove enough water in order to create the final dry bond. By raising the solids content of the adhesive, less water will need to be removed to dry the corrugated board. However, too high solids content in typical corrugating adhesives may result in premature drying of the adhesive preparation leading to insufficient conversion of the slurry part of the starch into adhesive starch. This will result in a poor quality product.

US 5,972,091 describes a starch replacement composition for corrugating adhesives and the adhesives prepared therewith. In this patent the authors describe a new corrugating adhesive that is based upon starch and plant germ, that are first mixed together in dry form as a premixture. This premixture is then used to prepare typical corrugating adhesives in various manners. The authors describe different types of corrugating adhesives such as carrier type, no carrier type, and carrier-no-carrier type adhesives. Processes are described for the preparation of each of these types of adhesives based upon the starch/plant germ premixture. The authors further claim the method for producing a corrugated board from such an adhesive as well as the corrugated board produced from the starch/plant germ based adhesive.

The authors claim that a major benefit of the invention is that reduced amounts of boron compound is required in this type of corrugating adhesive. However, no mention is made to the effects of this adhesive system on the speed of the corrugating process. Also, it is obvious that this starch replacement composition requires gelatinization to occur in the corrugator in order for the adhesive preparation to properly function and, therefore, requires that the corrugating equipment be operated in such a manner as to insure that gelatinization will occur in the operation. The use of caustic soda is still required.

US 4,279,658 describes the process for preparation of a starch paste via chemical-mechanical starch conversion. The starch is gelatinized at production sites where thermal energy is not available and is prepared through the use of mechanical shear subjected to a slurry in the presence of alkali. The resulting paste is described as stable and does not require further gelatinization prior to incorporation into adhesive formulations. The drawback of adhesives prepared with this paste is that they must still be gelatinized on site for use in corrugating adhesive applications. Also, it is obvious that application of such an adhesive in corrugating requires gelatinization to occur in the corrugator in order for the adhesive preparation to properly function. This will require that the corrugating equipment be operated in such a manner as to insure that gelatinization will occur in the operation, as typically done with standard corrugating adhesives.

US 5,855,659 describes an instant corrugating adhesive that supposedly does not require cooking and can be re-hydrated under ambient conditions. This adhesive is prepared by first making a dry blend of native starch (uncooked) and a hemicellulose. The hemicellulose is capable of being easily re-hydrated and therefore functions as the carrier phase for the uncooked starch and, therefore, resembles a standard Stein Hall type corrugating adhesive. One drawback of this adhesive is that the hemicellulose must first be extracted from a suitable source and then recovered from the extraction liquor, dried and mixed with the uncooked starch, which is a relatively complex method. The authors further describe that lumps may be formed upon re-hydration and an elevated temperature may therefore be required. This adhesive is also rather conventional in that it still functions as a Stein Hall type adhesive. It is obvious that this process requires gelatinization to occur in the corrugator in order for the adhesive preparation to properly function and, therefore, requires that the corrugating equipment be operated in such a manner as to insure that gelatinization will occur in the operation.

EP-A 990687 describes the use of amylopectin starch form genetically modified potatoes which as degraded by derivatisation and cold-water soluble, as an adhesive for various purposes, including for gluing corrugated board.

US 5,133,908 describes the production of suspensions of polymer nanoparticles by dissolving the polymer, such as a protein, in a solvent and adding a non-solvent followed by precipitating the nanoparticles. The nanoparticles are intended for incorporating a biologically active substance.

WO 00/40617 discloses a method for preparing starch particles by dispersing starch in water, dispersing the aqueous dispersion in an oil, crosslinking the starch in the aqueous phase and separating the starch particles thus formed.

WO 00/69916 describes a process for preparing biopolymer nanoparticles, using an extrusion process, wherein the biopolymer, for example starch or a starch derivative or mixtures thereof, is processed under high shear forces in the presence of a cross-linking agent. This patent application also describes starch nanoparticles, aqueous dispersions of said nanoparticles, and an extrudate prepared by the process which swells in an aqueous medium and forms a low viscous dispersion after immersion.

The starch particles are described as having a narrow particle size distribution with particle sizes below 400 nm, and especially below 200 nm, and are further characterized by their viscosity. Many applications are mentioned for use of the starch nanoparticles, including as a component for adhesives. However, no examples are provided to demonstrate the adhesive characteristics of the particles nor are any specific adhesive applications mentioned.

We have surprisingly found that suspensions of biopolymer nanoparticles, such as starch nanoparticles produced according to WO 00/69916, can be used as adhesives in corrugating under conditions suitable for these adhesives. We refer to these adhesives as biopolymer latex adhesives.

It is not obvious to those skilled in the art that a suspension of biopolymer nanoparticles, such as that produced according to WO 00/69916, could be a suitable alternative to the typical Stein Hall type corrugating adhesives used today. As stated earlier, a typical corrugating adhesive contains a major portion of uncooked slurry starch, in the form of starch granules, which are suspended in a solution of dissolved starch (carrier starch). A typical corrugating process requires sufficient heat to be transferred in the corrugating process for the uncooked starch to reach its gel point. It is well known that native starch particles are not adhesive in nature and only become adhesive when they are cooked to their gel point and become dissolved. Therefore, it would not be obvious that other dispersions of discrete particles of starch, for example those produced according to WO 00/69916, which are not dissolved, could be suitable as adhesives for corrugating operations.

Biopolymer latex adhesives are attractive for corrugating for various reasons. For example, these adhesives are ready to use by the corrugating facility, do not require a gelatinization step at the corrugating facility, do not require the addition of caustic soda, do not require the addition of borax compounds, and do not require installation of complex starch adhesive kitchens at corrugating facilities. Furthermore, these adhesives are stable for extended periods whereas traditional corrugating adhesives begin to lose their stability only hours after their preparation. These new adhesives do not require that gelatinization occurs in the corrugator for the adhesive to function, which translates to decreased energy and/or increased corrugating speeds. Biopolymer latex adhesives can be prepared at higher solids contents than typical starch adhesives, at similar viscosities and, therefore, may provide additional energy savings in corrugating. The reduced amount of chemicals and simplified adhesive preparation may translate to a safer workplace and less labor intensive corrugating operations.

The biopolymer latex adhesives can be produced as described in WO 00/69916. Thus, biopolymers such as starch and other polysaccharides such as cellulose, hemicellulose and gums, as well as proteins (e.g. gelatin, whey protein) can be formed into nanoparticles by processing the biopolymer using shear forces and simultaneous crosslinking. The biopolymers may be previously modified, e.g. with cationic groups, carboxymethyl groups, by acylation, phosphorylation, hydroxyalkylation, oxidation and the like. Starch and mixtures of starch with other (bio)polymers containing at least 50% starch are preferred. Especially preferred is high-amylopectin starch (i.e. low-amylose starch), i.e. starch having a content of at least 75%, especially at least 90% of amylopectin, such as waxy starch,. The biopolymer preferably has a dry substance content of at least 50%, especially at least 60 %by weight at the time when processing starts.

Processing using shear forces here means a mechanical treatment, which is in particular an extrusion treatment performed at elevated temperature (above 40°C, especially above 60°C, below the degradation point of the polymer, up to e.g. 200°C, especially up to 140°C) under conditions of high shear. The shear can be effected by applying at least 100 J of specific mechanical energy (SME) per g of biopolymer. Depending on the processing apparatus used the minimum energy may be higher; also when non-pregelatinized material is used, the minimum SME may be higher, e.g. at least 250 J/g, especially at least 500 J/g. The mechanical treatment is conveniently performed at elevated temperature. The elevated temperature may be moderated, in case of starch, by using an alkaline medium or by using pregelatinized starch. During the mechanical treatment, the biopolymer is present in high concentration, preferably at least 50 wt.%, in an aqueous solvent, such as water or a water/alcohol mixture. High pressure (e.g. between 5 and 150 bar) may be applied to facilitate processing at high concentrations. A plasticizer may be present in addition to the water or water/alcohol mixture, such as a polyol (ethyleneglycol, propyleneglycol, polyglycols, glycerol, sugar alcohols, urea, citric acid esters, etc.) at a level of 5-40 % by weight of the biopolymer. However, water can already act as a plasticizer. The total amount of plasticizers (i.e. water and other such as glycerol) is preferably between 15 and 50%. A lubricant, such as lecithin, other phospholipids or monoglycerids, may also be present, e.g. at a level of 0.5-2.5 % by weight. An acid, preferably a solid or semi-solid organic acid, such as maleic acid, citric acid, oxalic, lactic, gluconic acid, or a carbohydrate-degrading enzyme, such as amylase, may be present at a level of 0.01 -5 % by weight of biopolymer; the acid or enzyme assists in slight depolymerization which is assumed to be advantageous in the process of producing nanoparticles of a specific size.

An important step in the process of producing the biopolymer latex is the crosslinking during the mechanical treatment. The crosslinking is preferably reversible, i.e. the crosslinks are partly or wholly cleaved after the mechanical treatment step. Suitable reversible crosslinkers include those which form chemical bonds at low water concentrations, which dissociate or hydrolyse in the presence of higher water concentrations. This mode of crosslinking results in a temporary high viscosity during processing followed by a lower viscosity after processing. Examples of reversible crosslinkers are dialdehydes and polyaldehydes, which reversibly form hemiacetals, acid anhydrides and mixed anhydrides and the like. Suitable dialdehydes and polyaldehydes are glutaraldehyde, glyoxal, periodate-oxidised carbohydrates, and the like. Glyoxal is a particularly suitable crosslinker for the purpose of producing the latex particles. Such crosslinkers may be used alone or as a mixture of reversible crosslinkers, or as a mixture of reversible and non-reversible crosslinkers. Thus, conventional crosslinkers such as epichlorohydrin and other epoxides, triphosphates, divinyl sulphone, can be used as non-reversible crosslinkers for polysaccharide biopolymers, while dialdehydes, thiol reagents and the like may be used for proteinaceous biopolymers. The crosslinking reaction may be acid- or base-catalysed. The level of crosslinking agent can conveniently be between 0.1 and 10 weight % with respect to the biopolymer. The cross-linking agent may already be present at the start of the mechanical treatment, but in case of a non-pregelatinized biopolymer such as granular starch, it is preferred that the crosslinking agent is added later on, i.e. during the mechanical treatment.

The mechanically treated, crosslinked biopolymer is then formed into a latex by dispersion in a suitable solvent, usually water and/or another hydroxylic solvent such as an alcohol), to a concentration of between 4 and 50 wt.% especially between 10 and 40 wt.%. Prior to the dispersion a cryogenic grinding step may be performed, but stirring with mild heating may work equally well. This treatment results in a gel which either spontaneously or after induction by water adsorption, is broken into a latex. This viscosity behaviour can be utilised for applications of the particles, such as improved mixing, etc. If desired, the dispersed biopolymer may be further crosslinked, using the same or other crosslinking agents as describe above.

The use of the biopolymer latex as an adhesive in the production of corrugated board does not require high alkalinities resulting from the use of caustic soda as in the prior art process, and thus the pH in the adhesive can remain below 10, especially below 9 during the process. Also, the use of these latexes does not require high temperatures for the adhesive to become active, and thus, the heat applied during the process can remain as low as necessary for the drying only. Thus, the surface temperature of the board with the adhesive on it, which is assumed to be at maximum equal to the surface temperature of the drying equipment such as rolls and plates, can remain below 150 °C, or even below 130 °C.

The corrugated board may comprise one corrugated medium attached at either side to liner sheets (single wall board) or several (two, three or even more) single wall boards adhered to one another and externally covered by a liner (multiple wall board). The corrugated media and liners are attached by continuous or discontinuous adhesive layers in which the biopolymer particles are typically discernible.

The following examples will more fully illustrate the practice of this invention but should not be construed as limiting its scope.

### Example 1. Preparation of biopolymer latex adhesives

The technique described in WO 00/69916 was used to prepare biopolymer latex adhesives by reactive extrusion processing. Native potato starch (PN), wheat starch (WN), corn starch (CN), and waxy corn starch (WCN) were used to prepare the nanoparticles. The extrudate pellets comprised of starch nanoparticles were then dispersed in water using mechanical agitation. The nanoparticles (up to 35% (w/v) solids) were dispersed for 15 to 60 min at 45 °C using a 3 blade mixer at 200 rpm. The stability of the resulting biopolymer latexes was found to depend on the starch and the level of cross-linking.

Dispersions made with extrusion samples of PN, CN and WN with glycerol and glyoxal were stable for only several hours when the glyoxal content was less than 4 parts, and dried films obtained from these dispersions were not transparent. This is illustrated in Table 2 for PN starch. Dispersions obtained for the reactively extruded PN with 4 and 5 parts glyoxal were stable for up to seven days, and dried films obtained from these dispersions were transparent. A 24% (w/v) dispersion was stable for 7 days and a 12% (w/v) dispersion was stable for 1 month.

**Table 1: Composition of starch extrudates and viscosity of resulting latexes.**

| **Sample** | **premix [pph]*** | | | **Crosslinker injection [pph]** | | **Latex viscosity**** |
|---|---|---|---|---|---|---|
| | starch | water | glycerol | glyoxal | water | (mPa.s) |
| 1 | CN | 21 | 18 | 2 | 17 | >10,000 |
| 2 | WN | 21 | 18 | 3 | 17 | >10,000 |
| 3 | PN | 21 | 18 | 3 | 17 | >10,000 |
| 4 | PN | 21 | 18 | 4 | 17 | 7,000 |
| 5 | PN | 21 | 18 | 5 | 17 | 400 |
| 6 | PN | 21 | 18 | 2 | 17 | >10,000 |
| 7 | WCN | 21 | 18 | 2 | 17 | 400 |

| | | | | | | |
|---|---|---|---|---|---|---|
| *pph = parts per hundred parts of dry starch | | | | | | |
| * * viscosity measured with a Brookfield viscometer for a 20% (w/w) dispersion at a shear rate of 2.5 s⁻¹ after mixing at 100 s⁻¹ | | | | | | |

In contrast to the results obtained for PN starch, a 24% (w/v) dispersion of reactively extruded WCN starch with only 2 parts of glyoxal was found to have low viscosity and was stable for more than 6 months. The particle size range for samples 5 and 7 was determined by Dynamic Laser Light Scattering (DLS) and found to be narrow, ranging from 50-100 nm.

Two adhesive dispersions were readily prepared at 20 and 26% (w/w) solids, by mixing the powdered extrudate at 45 °C for 15 to 30 min, respectively, using a 3 blade mixer at 200 rpm.

### Example 2. Preparation of typical (Stein Hall type) corrugating adhesives

A standard corrugating adhesive was prepared using corn starch (COLLYS HV obtained from Roquette) to a total dry solids content of 20.4% (w/w) [equivalent to 25.6% (w/v)]. The standard adhesive consisted of a carrier phase and a granular slurry phase as described in Table 2. The carrier phase was prepared by dissolving the starch in water under mechanical agitation at 60 °C, using 3.26 parts corn starch, 0.33 parts sodium hydroxide, and 29.66 part of water [starch solids=9.8% (w/w)]. The carrier phase was subsequently allowed to cool to room temperature. The granular phase was prepared by adding 0.30 parts borax and 16.47 parts corn starch to 50.00 parts of water [starch solids=24.7% (w/w)], and stirring the mixture under mechanical agitation at room temperature. The carrier phase was added to the granular phase under mechanical agitation at room temperature [total starch solids=19.7% (w/w) or 24.8 % (w/v)]. This sample was used in the pilot corrugating experiment of Example 4.

**Table 2: Recipe for a typical Stein Hall type corrugating adhesive.**

| | Stein Hall 1 | Stein Hall 2 |
|---|---|---|
| Corn Starch | COLLYS HV | COLLYS R |
| % Solids (w/w) | 20 | 26 |
| Carrier Phase | Component (pph) | Component (pph) |
| Corn starch | 3.26 | 2.64 |
| Sodium hydroxide pellets | 0.33 | 0.97 |
| Water | 29.66 | 36.38 |
| Granular Slurry Phase | | |
| Corn starch | 16.47 | 23.33 |
| Borax | 0.30 | 0.31 |
| Water | 50.00 | 36.38 |

A second Stein Hall type adhesive was prepared in a similar fashion using modified corn starch (COLLYS R obtained from Roquette) to a total dry solids content of 26.0% (w/w) [equivalent to 35.7% (w/v)]. The carrier phase was prepared by dissolving the starch in water under mechanical agitation at 60 °C, using 2.64 parts corn starch, 0.97 parts sodium hydroxide, and 36.38 part of water [starch solids=6.6% (w/w)]. The carrier phase was subsequently allowed to cool to room temperature. The granular phase was prepared by adding 0.31 parts borax and 23.33 parts corn starch to 36.38 parts of water [starch solids=38.9% (w/w)], and stirring the mixture under mechanical agitation at room temperature. The carrier phase was added to the granular phase under mechanical agitation at room temperature [total starch solids=26.0% (w/w) or 35.7% (w/v)]. This sample was used in the viscosity-temperature experiments of Example 3.

The resulting typical Stein Hall type corrugating adhesives began to lose their stability after only a few hours at 30°C.

### Example 3. Comparison of a biopolymer latex adhesive to a typical Stein Hall type corrugating adhesive.

The temperature dependent viscosity properties of adhesives prepared in examples 1 and 2 were compared. Both adhesive preparations were at 26% solids (w/w) and temperature was set at 25, 30, 40, 50, 60, 70, or 80 °C. The biopolymer latex adhesive chosen was prepared from WCN. Viscosities were measured after equilibrating the adhesive sample for 30 sec at the desired temperature. Table 3 shows the viscosities obtained for the different samples at the different temperatures.

**Table 3: Viscosity properties for different corrugating adhesives.**

| **Temperature (°C)** | **Biopolymer Latex Adhesive (mPa.s)** | **Stein Hall type adhesive (mPa.s)** |
|---|---|---|
| 25 | 1121 | 10,221 |
| 30 | 1066 | 9707 |
| 40 | 809 | 7132 |
| 50 | 607 | 5074 |
| 60 | 423 | 5580 |
| 70 | 276 | 80,882 |
| 80 | 184 | >100,000 |

As can be seen, for the biopolymer latex adhesive, viscosity decreased as temperature increased. For the typical Stein Hall type corrugating adhesive, viscosity decreased until the temperature reached the gel point of the granular slurry starch, at which point viscosity increased tremendously. In all cases, the viscosity of the biopolymer latex adhesive was lower than that of the Stein Hall type adhesive, even at the same solids contents. This data suggest that biopolymer latex adhesives of much higher solids contents that Stein Hall adhesives can be prepared, with viscosities similar to Stein Hall adhesives. Furthermore, this data shows that there is no gel point for the biopolymer latex adhesive as typically encountered for the Stein Hall type adhesives.

### Example 4. Application of biopolymer latex adhesive in corrugating applications

A pilot facility was utilized to compare the performance of the biopolymer latex adhesive of Example 1 (at 21% (w/w) solids; Laury Cup viscosity of 15-20 seconds) to the standard Stein Hall type adhesive of Example 2 (at 20% (w/w) solids; Laury Cup viscosity of 15-20 seconds) in corrugated board manufacture. The pilot corrugator used was a scaled down version of an industrial single face corrugator. Pilot corrugating experiments were carried out to compare the two adhesive types using a 13 cm wide profile of type A (fluting size: width = 8.6 mm - Height = 4.5 mm) with fingers. Two types of paper combinations were tested, referred to as "Common" and "Heavy", to discern the different weight of papers typically used. These are further described as follows:
- Common: Test liner 140 g/m² + Wellenstoff 112 g/m²
- Heavy: Kraft liner 190 g/m² + Semichemical fluting 150 g/m²

A special device allowed green bond measurements on this corrugator. A metal finger rested on the fluting of the corrugated board, with a cantilever that supported an adjustable weight. The weight on the cantilever rod could be adjusted by sliding the weight on a graduated scale. The resistance of the wet bond between fluting and liner, otherwise named green bond, corresponded to the position of the weight on this graduated arm. A value of the green bond thus measured was reported for the production speed of the corrugator, and depended on the green bond of the particular adhesive being evaluated. Based on extensive experience obtained over the years on this pilot corrugator, this value must be at least 20 for acceptable green bond.

A standard method was used to determine the dry bond of the adhesive, referred to as Pin Adhesion Test (P.A.T.) values, or Pin Adhesion. Test pieces (width = 3 cm) were preconditioned in dry atmosphere (30°C/30% RH), then conditioned and tested in atmosphere at 23°C/50% RH. A Lorentzen press, type 94512, was used to measure the maximum force of the glue bonds. This separation force is expressed in N/cm.

For all data (both samples at all speeds), the level of glue deposit was within the range of 3 to 5 g/m² (dry basis). The results in Table 4 demonstrate that the biopolymer latex adhesive has significantly improved corrugating performance compared to the standard Stein Hall type adhesive. The temperature mentioned din table 4 is the temperature of the heated rolls. The corrugator was limited to a speed of less that 245 m/min and 146 m/min for the common and heavy grammage paper combination, respectively when utilizing the Stein Hall type adhesive. This is evident from an observed "white glue defect" that demonstrated the presence of ungelatinized starch particles resulting from the high speed at which not enough heat is transferred to the paper. As a result, the Pin Adhesion was below the minimum 4 N/cm requirement.

In contrast, when running with the biopolymer latex adhesive (Nanospheres), the corrugator was able to run both paper grades at speeds up to 350 m/min, which was the maximum speed for this corrugator, with Pin adhesion values measured well above the minimum 4 N/cm requirement. The green bond was judged acceptable up to speeds of 200 m/min, beyond which this test was not feasible due to safety considerations. However, above 200 m/min the dry bond for the biopolymer latex adhesive was in all cases well above the minimum requirement. Although not tested for heavy grammages, it was observed that lower temperatures could be used on the corrugator when using the biopolymer latex adhesive, while providing sufficient PAT values, indicating the potential for substantial energy savings in corrugating operations.

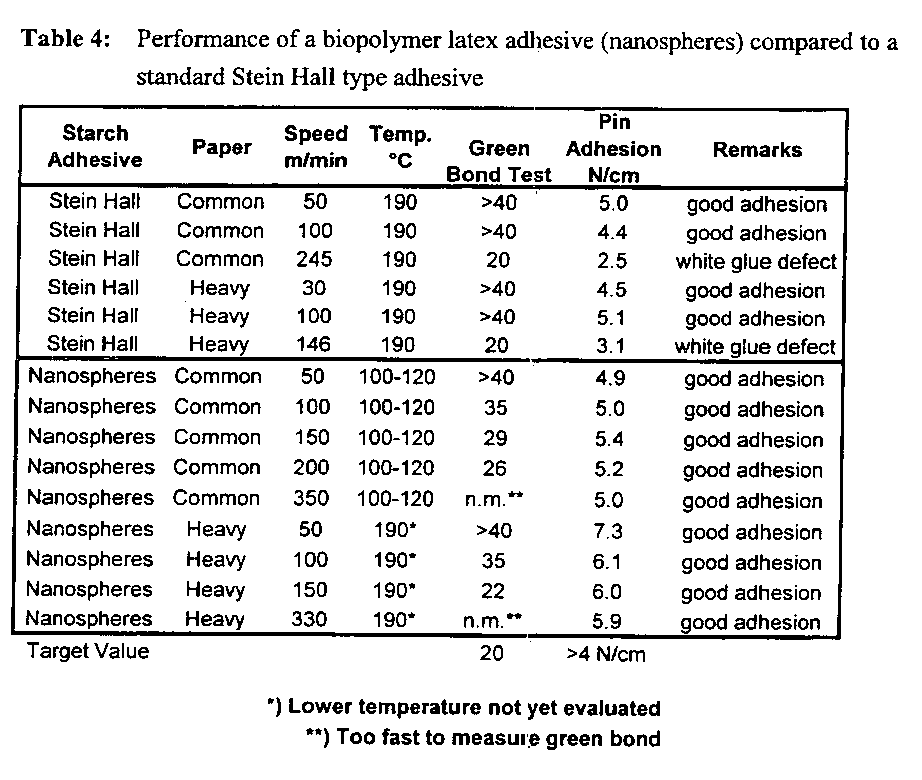

## Claims

1. A process for producing corrugated board, wherein a biopolymer latex adhesive is used as the corrugating adhesive, the latex being a stable aqueous dispersion of biopolymer nanoparticles having a size below 1000 nm, the dispersion having a dry solids content between 10 and 50% (w/v), and wherein the corrugating operation is carried out using a surface temperature of the board of below 150°C.

2. A process according to claim 1, in which the biopolymer latex adhesive can be obtained by plasticizing a biopolymer using shear forces in the presence of a cross-linking agent.

3. A process according to claim 2, in which the biopolymer is selected from starch, cellulose, hemicellulose, protein, derivatives of these biopolymers, and mixtures of these biopolymers or their derivatives.

4. A process according to claim 3, in which said biopolymer is starch, preferably high amylopectin-type starch.

5. A process according to claim 4, wherein the starch consists of at least 75%, especially at least 90% amylopectin.

6. A process according to any of the preceding claims, in which the latex adhesive is comprised of discrete biopolymer nanoparticles, which have a size of between 50 and 250 nm.

7. A process according to any of the preceding claims, in which the latex adhesive is used as a stable aqueous dispersion having a dry solids content between 20 and 35% (w/v).

8. A process according to any of the preceding claims, in which the biopolymer latex adhesive does not have a gel point.

9. A process according to any one of the preceding claims, wherein at least one corrugated medium is attached to at least one liner.

10. Corrugated board obtainable by the process according to any one of claims 1-9, wherein at least one corrugated medium and at least one liner are attached by a layer containing biopolymer particles having a particle size between 50 and 1000 nm.

## Patentansprüche

1. Verfahren zur Herstellung von Wellpappe, wobei ein Biopolymer-Latexklebstoff als Wellklebstoff verwendet wird, wobei der Latex eine stabile wässrige Dispersion von Biopolymer-Nanoteilchen mit einer Größe unter 1000 nm ist, die Dispersion einen Trockenfeststoffgehalt zwischen 10 und 50% (Gew.Nol.) aufweist und wobei der Wellvorgang unter Verwendung einer Oberflächentemperatur der Pappe unter 150°C durchgeführt wird.

2. Verfahren nach Anspruch 1, wobei der Biopolymer-Latexklebstoff durch Plastifizieren eines Biopolymers unter Verwendung von Scherkräften in Gegenwart eines Vernetzungsmittels erhalten werden kann.

3. Verfahren nach Anspruch 2, wobei das Biopolymer ausgewählt ist aus Stärke, Cellulose, Hemicellulose, Protein, Derivaten dieser Biopolymere und Gemischen von diesen Biopolymeren oder deren Derivaten.

4. Verfahren nach Anspruch 3, wobei das Biopolymer Stärke, vorzugsweise ein Stärkentyp mit hohem Amylopektin-Gehalt, ist.

5. Verfahren nach Anspruch 4, wobei die Stärke aus mindestens 75%, insbesondere mindestens 90%, Amylopektin besteht.

6. Verfahren nach einem der vorhergehenden Ansprüche, wobei der Latexklebstoff aus einzelnen Biopolymer-Nanoteilchen besteht, die eine Größe zwischen 50 und 250 nm aufweisen.

7. Verfahren nach einem der vorhergehenden Ansprüche, wobei der Latexklebstoff als stabile wässrige Dispersion mit einem Trockenfeststoffgehalt zwischen 20 und 35% (Gew./Vol.) verwendet wird.

8. Verfahren nach einem der vorhergehenden Ansprüche, wobei der Biopolymer-Latexklebstoff keinen Gelierungspunkt aufweist.

9. Verfahren nach einem der vorhergehenden Ansprüche, wobei mindestens ein gewelltes Medium an mindestens eine Decklage gebunden ist.

10. Wellpappe, erhältlich durch das Verfahren nach einem der Ansprüche 1 bis 9, wobei mindestens ein gewelltes Medium und mindestens eine Decklage über eine Schicht verbunden sind, die Biopolymer-Teilchen mit einer Teilchengröße zwischen 50 und 1000 nm enthält.

## Revendications

1. Procédé de fabrication de carton ondulé, dans lequel on utilise un adhésif de latex biopolymère comme adhésif d'ondulation, le latex étant une dispersion aqueuse stable de nanoparticules de biopolymère ayant une dimension inférieure à 1 000 nm, la dispersion ayant une teneur en solides secs comprise entre 10 et 50 % (p/v) et dans lequel l'opération d'ondulation est mise en oeuvre en utilisant une température de surface du carton en dessous de 150° C.

2. Procédé selon la revendication 1, dans lequel l'adhésif de latex biopolymère peut être obtenu en plastifiant un biopolymère en utilisant des forces de cisaillement en présence d'un agent de réticulation.

3. Procédé selon la revendication 2, dans lequel le biopolymère est choisi parmi l'amidon, la cellulose, l'hémicellulose, les protéines, les dérivés de ces biopolymères et les mélanges de ces biopolymères ou leurs dérivés.

4. Procédé selon la revendication 3, dans lequel ledit biopolymère est l'amidon, de préférence de l'amidon du type à teneur élevée en amylopectine.

5. Procédé selon la revendication 4, dans lequel l'amidon renferme au moins 75 %, notamment au moins 90 % d'amylopectine.

6. Procédé selon l'une quelconque des revendications précédentes, dans lequel l'adhésif de latex est constitué de nanoparticules de biopolymère distinctes, qui ont une dimension comprise entre 50 et 250 nm.

7. Procédé selon l'une quelconque des revendications précédentes, dans lequel l'adhésif de latex est utilisé comme une dispersion aqueuse stable ayant une teneur en solides secs comprise entre 20 et 35 % (p/v).

8. Procédé selon l'une quelconque des revendications précédentes, dans lequel l'adhésif de latex biopolymère n'a pas un point de gel.

9. Procédé selon l'une quelconque des revendications précédentes, dans lequel au moins un milieu ondulé est fixé à au moins une garniture.

10. Carton ondulé apte à être obtenu par le procédé selon l'une quelconque des revendications 1 à 9, dans lequel au moins un milieu ondulé et au moins une garniture sont fixés par une couche contenant des particules de biopolymère ayant une dimension de particule comprise entre 50 et 1 000 nm.
